# EUROPÄISCHE PATENTSCHRIFT

(11) **EP 2 597 483 B1**
(45) Veröffentlichungstag und Bekanntmachung des Hinweises auf die Patenterteilung: **29.03.2017**
(21) Anmeldenummer: 11190783.8
(22) Anmeldetag: 25.11.2011
(51) Int. Cl.: G01C 3/08, G01S 7/486, G01S 17/10

(54) **Entfernungsmesser**
Distance sensor
Appareil de mesure de distance

(43) Veröffentlichungstag der Anmeldung: 29.05.2013
(73) Patentinhaber: Vectronix AG, 9435 Heerbrugg (CH)
(72) Erfinder: Giacotto, Luca, 9434 Au (CH)
(74) Vertreter: Gyaja, Christoph Benjamin

(56) Entgegenhaltungen:
- EP-A2- 2 315 053
- US-A- 5 428 439

## Beschreibung

Die Erfindung betrifft ein Beobachtungsgerät zur Anzielung eines Zielobjekts mit einem elektrooptischen Entfernungmesser nach dem Gegenstand des Anspruchs 1 sowie einem Entfernungsmessverfahren nach dem Gegenstand des Anspruchs 8. Bei elektrooptischen Distanzmessern (EDM) wird ein optisches Signal vom Gerät in Richtung des Zielobjekts ausgesendet, - dessen Distanz es zu bestimmen gilt - beispielsweise als optische Strahlung in Form von Laserlicht, Wird dabei sichtbares Licht verwendet, so ist der zur Vermessung angezielte Punkt auf dem Zielobjekt visuell erkennbar. Werden hingegen nicht sichtbare Wellenlängen, z.B. im Infrarotbereich verwendet, so kann die Anzielung des zu vermessenden Punktes mittels einer optischen Einrichtung, beispielsweise mit einem Fadenkreuz in einer Beobachtungseinrichtung, durchgeführt werden. Die Oberfläche des Zielobjektes wirft zumindest einen Teil des optischen Signals zurück, meist in Form einer diffusen Reflektion. Die zurückgeworfene optische Strahlung wird im Gerät von einem photosensitiven Element in ein elektrisches Empfangssignal umgewandelt. Unter Kenntnis der Ausbreitungsgeschwindigkeit des optischen Signals und anhand der ermittelten Laufzeit zwischen Aussenden und Empfangen des Signals (also jener Laufzeit, welche vom Licht für das Zurücklegen der Entfernung vom Gerät zum Zielobjekt und retour benötigt wird) kann die Distanz zwischen Gerät und Zielobjekt bestimmt werden. Meist befinden sich dabei im optischen Sende- bzw. Empfangspfad optische Komponenten zur Strahlformung, Umlenkung, Filterung, etc. - wie etwa Linsen, Wellenlängenfilter, Spiegel usw. Das Aussenden und Empfangen kann dabei koaxial oder über zwei benachbarte Optiken erfolgen. Derartige Distanz- oder Entfernungsmesser können als eigenständige Geräte ausgebildet sein, können aber auch in andere Geräte integriert sein, zum Beispiel in Vermessungsgeräte wie Theodoliten oder Tachymeter, oder in Beobachtungsgeräte wie Fernrohre, Monokulare, Binoculare, Nachtsichtgeräte, etc..

Zur Kompensation von Einflüssen, welche die Messergebnisse verfälschen könnten, (beispielsweise Temperatureinflüsse, Bauteiltoleranzen, Driften von elektronischen Komponenten, etc.) kann ein Teil des ausgesendeten optischen Signals als Referenzsignal über eine Referenzstrecke bekannter Länge von der Lichtquelle zu einem lichtempfindlichen Empfangselement geführt werden. Die Referenzstrecke kann dabei fix im Gerät eingebaut sein oder beispielsweise als ein einschwenkbares, oder aufsteckbares optisches Umlenkelement ausgebildet sein. Das von diesem Referenzsignal resultierende Empfangssignal kann von dem auch zur Messung verwendeten oder von einem weiteren, eigens für das Referenzsignal vorgesehenen, photosensitiven Element empfangen werden. Das resultierende elektrische Referenzsignal kann zur Referenzierung und/oder Kalibrierung der ermittelten Messwerte herangezogen werden.

Um eine entsprechend hohe Genauigkeit der Distanzmessung zu erzielen, sind aufgrund der hohen Ausbreitungsgeschwindigkeit von optischer Strahlung die Anforderungen an das zeitliche Auflösungsvermögen bei elektrooptischen Distanzmessern (EDM) recht hoch. Beispielsweise ist für eine Distanzauflösung von 1m eine Zeitauflösung mit einer Genauigkeit von etwa 6,6 Nanosekunden erforderlich.

Bezüglich der emittierbaren Signalleistung sind den hier behandelten elektrooptischen EDM Grenzen vorgegeben. So bestimmt bei der Emission von Laserlicht die Augensicherheit eine maximal zulässige mittlere Signalleistung, welche emittiert werden darf. Um für die Messung dennoch hinreichend starke Signalintensitäten zu erhalten, welche vom Empfänger detektierbar sind, wird im Pulsbetrieb gearbeitet. Das ausgesendete optische Signal ist in seiner Intensitätsamplitude impulsartig moduliert. Es werden kurze Pulse mit hoher Spitzenleistung, gefolgt von Pausen ohne Lichtemission, ausgesendet. Somit weist der zurückgeworfene Anteil der Pulse eine genügend hohe Intensität auf, um diese aus den Hintergrundstörungen und dem Rauschen, insbesondere auch bei Vorhandensein von Hintergrundlicht (Sonnenlicht, künstlicher Beleuchtung, etc.), auswerten zu können, ohne dabei die sicherheitstechnisch maximal zulässige mittlere Emissionsleistung zu überschreiten.

Wie etwa in EP 1 311 873 beschrieben, kann dabei auch das Aussenden von Paketen von Pulsen, gefolgt von Pausen ohne Pulsaussendung, - der so genannten Burst-Betrieb - angewandt werden, um eine reduzierte mittlere Leistung des Sendesignals sowie ein verbessertes Signal-Rausch-Verhältnis (SNR) zu erzielen. Die Anzahl der Pulse pro Paket kann je nach Auswertekonzept und Messsituation variiert werden.

Zur Ermittlung der Laufzeit des Signals ist zum einen die so genannte Time-of-Flight (TOF) Methode bekannt, welche die Zeit zwischen dem Aussenden und Empfangen eines Lichtpulses ermittelt, wobei die Zeitmessung anhand der Flanke, dem Spitzenwert oder einer anderen Charakteristik der Pulsform erfolgt. Unter Pulsform ist dabei ein zeitlicher Lichtintensitätsverlauf des Empfangssignals, speziell des empfangenen Lichtpulses - erfasst durch das photosensitive Element - zu verstehen. Es können auch die Signale mehrerer Pulse zur Auswertung phasenrichtig akkumuliert werden, um das Signal-Rausch-Verhältnis zu verbessern. Der Zeitpunkt des Sendens kann entweder anhand eines elektrischen Impulses zur Auslösung der Emission, anhand des an den Sender angelegten Signals oder anhand eines oben erwähnten Referenzsignals ermittelt werden.

Zum anderen ist das so genannte Phasenmessprinzip bekannt, welches die Signallaufzeit durch Vergleich der Phasenlage der Amplitudenmodulation des gesendeten und empfangenen Signals ermittelt. Dabei hat das Messergebnis bei einer Sendefrequenz aber Mehrdeutigkeiten in Einheiten der Signalperiodendauer, sodass weitere Maßnahmen zur Auflösung dieser Mehrdeutigkeiten erforderlich sind. Beispielsweise zeigt WO 2006/063740 ein Messen mit mehreren Signalfrequenzen, welche in unterschiedlichen Eindeutigkeitsbereichen resultieren, wodurch falsche Lösungen ausgeschlossen werden können. Auch WO 2007/022927 behandelt Eindeutigkeiten in der Phasenmessung.

Die Intensität des vom Empfänger zurückgeworfenen Anteils des ausgesendeten Lichts hängt von verschiedenen Faktoren ab und kann daher auch stark variieren. Als dominante Einflussgröße ist hierbei zum einen die Distanz zum Zielobjekt zu nennen, mit welcher sich die Aufweitung des ausgesendeten Messlichts vergrößert und auch die Signalabschwächung durch atmosphärische Störungen, wie Dunst, Nebel, Hitzeflimmern oder Staub, aufgrund des längeren Weges zunehmen. Bei Entfernungsmessern sind dabei oft große Reichweitenbereiche gefordert, beispielsweise vom cm- bis zum km-Bereich. Bei Beobachtungsgeräten mit Entfernungsmessern (etwa Nachtsichtgeräte, Zielfernrohre, Teleskope, Binokulare, etc.) sind oftmals Reichweiten von einigen Metern bis hin zu vielen Kilometern, etwa von 5m bis zu 20km oder 30km, und dies bei einer Messgenauigkeit von einigen Metern oder gar darunter, beispielsweise von ±1m bis ±5m.

Zum anderen beeinflusst auch die Reflektivität des Zielobjekts für die zur Messung verwendete Wellenlänge die Intensität des zurückgeworfenen Lichtanteils, welche in einem Bereich von einem nahezu 100% spiegelnden bis hin zu einem beinahe gänzlich absorbierenden Zielobjekt schwanken kann.

Ist das empfangene Signal zu schwach, so kann es nicht mehr eindeutig aus dem Hintergrundrauchen oder dem Umgebungslicht erkannt werden, und es ist aufgrund des schlechten Signal-Rausch-Verhältnisses nur eine ungenaue oder schlimmstenfalls gar keine Distanzmessung möglich. Ist das empfangene optische Signal hingegen zu stark, kann dies zu einer Sättigung im Empfänger, z.B. des Empfangselements, einer Verstärkerstufe oder eines A/D-Wandlers führen. Durch eine derartige Sättigung wird eine genaue Distanzmessung ebenfalls erschwert oder verunmöglicht.

Bezüglich der Kompensation von distanzabhängigen Intensitätsunterschieden zeigt EP 2 071 358 eine Lösung, bei welcher ein Polarisationsfilter derart in der Empfängeroptik platziert wird, dass aufgrund des unterschiedlichen Einfallswinkels das Licht von nahen Zielen gedämpft, das von fernen Zielen jedoch nicht gedämpft wird.

Auch bei einer Verwendung eines internen Referenzpfades können zwischen Referenz- und Messsignal große Intensitätsunterschiede auftreten, speziell, wenn der Referenzpfad eine konstante, unveränderliche Auskoppelrate aufweist und die Emissionsleistung und/oder der Verstärkungsfaktor des Empfängers variiert wird, kann der Dynamikbereich zwischen Referenzsignal- und Empfangssignal-Amplitude recht bald an die Grenzen des Auflösungsvermögen des A/D-Wandlers stoßen.

Auch im so genannten Mehrziel-Fall, wenn das Messlicht von mehreren Objekten in verschiedenen Entfernungen entlang der Messrichtung zurückgeworfen wird, gestaltet sich die Signalauswertung aufgrund der unterschiedlichen Intensitäten der zurückkommenden Strahlung schwierig, insbesondere, wenn der derselbe Empfänger für das Referenzlicht und das Messlicht verwendet wird. Beispielsweise kann bei einer Entfernungsmessung durch eine Fenster- oder eine Glasscheibe (etwa in einem Gebäude oder in einem Fahrzeug) diese Scheibe aufgrund ihrer Nähe einen höheren Lichtanteil zurückwerfen als das eigentliche Zielobjekt der Messung. Somit kann das Erkennen des Messlichts schwierig sein, speziell, falls die Reflexion der Scheibe den Empfänger in Sättigung bringt, worauf dieser eine gewisse Zeit zur Regenerierung und zum Abbau der Sättigung und Wiederherstellung des normalen Betriebszustands benötigt. Anders gesprochen, ist während dieser Zeit der Empfänger sozusagen geblendet, also quasi blind für das eigentliche Messsignal. Auch bei Messungen knapp vorbei an Kanten, durch Büsche oder Baumkronen, durch Dunstbänke, durch Nebel, durch Rauch, durch Staub, etc. können ähnliche Effekte auftreten. Ein ähnlicher Effekt kann beispielsweise auch bei Geräten mit koaxialen optischen Achsen auftreten, bei welchen Stör-Reflektionen des eingespeisten Sendesignals an der Geräteoptik auf den Empfänger gelangen können. Zwar können diese Störsignale gegebenenfalls auch als Referenzpfad-Signale genutzt werden, jedoch können diese auch zu Sättigungsproblemen im Empfänger oder den bezüglich des Referenzpfads aufgeführten Problemen führen.

Im Idealfall sollte bei der Messung der Aussteuerbereich der Messschaltung möglichst voll ausgenützt werden, ohne dass es dabei jedoch zu Übersteuerungen kommt. Um dies zu erreichen, stehen im EDM zwei grundsätzliche Parameter zur Verfügung: Zum einen eine Variation der Intensität des emittierten Lichts und zum anderen eine Variation der Verstärkung bzw. Abschwächung des empfangenen Lichts.

Die Sendeintensität lässt sich durch Regelung der optischen Ausgangsleistung erreichen. Da mechanische oder optische Signalabschwächungen meist mechanisch zu wenig robust oder in einer automatisierten Realisierung zu aufwändig sind, wird eine Modifikation der Ausgangsleistung vorzugsweise über eine Variation der elektrischen Ansteuerung der lichtemittierenden Komponente, z.B. einer LED oder eines Lasers, speziell eines Halbleiterlasers durchgeführt. Die stark nichtlineare Ausgangscharakteristik von Halbleiterlasern und auch das stark temperaturabhängige Emissionsverhalten erschwereb jedoch in der Praxis eine derartige Regelung. Für das Schaltungsdesign stellt es eine Herausforderung dar, eine entsprechende Lasertreiberschaltung mit einer Ausgangsleistungsregelung in weiten Betriebsbereichen und unter Sicherstellung der Augensicherheit zu gewährleisten, insbesondere bei einem Feldeinsatz des Entfernungsmessers in Temperaturbereichen von beispielsweise -20 bis +60°C.

Im Empfänger lässt sich in erster Linie die Verstärkung der Schaltung vor dem Analog-Digital-Wandler beeinflussen. Zum einen kann die Verstärkung (bzw. die Vorspannung einer als Empfangselement eingesetzten Avalanche-Photodiode) variiert werden. Zum anderen, falls nicht die Sättigung des optoelektrischen Empfangselements die Grenze des Dynamikbereichs darstellt, kann auch eine Verstärkung in der nachfolgenden elektronischen Signalaufbereitung, speziell in einer Verstärkerstufe, variiert werden. Derartige Eingriffe in die Verstärkungsfaktoren haben jedoch meist auch parasitäre Effekte zur Folge, wie etwa Veränderung der Rauschzahlen, Systemdynamik, Bandbreite, und insbesondere der Signalverzögerungen oder Signallaufzeit in der Elektronik. Aufgrund der in EDMs geforderten hohen Distanz- bzw. Zeit-Messgenauigkeit haben derartige Einflüsse merkliche Auswirkungen auf das Messergebnis. Um dennoch eine hinreichende Messgenauigkeit erzielen zu können, müssen meist in aufwändigen Kalibriervorgängen, oftmals für jeden EDM spezifische, Kalibrierparameter bestimmt werden.

Aus oben angeführten Gründen werden vielfach Verstärkung und/oder Ausgangsleistung in diskreten Stufen variiert. Zu jeder Stufe (bzw. Kombination von Stufen bei mehreren variablen Eingriffspunkten) wird jeweils ein Satz von Kalibrierparametern ermittelt. Die Stufen oder Stufen-Kombinationen werden dabei auch als Operationsmodi bezeichnet. Beispielsweise kann jeweils ein Kalibrierparametersatz für jede der möglichen Ausgangs- und Eingangskonfigurationen erforderlich sein, wobei zur Abdeckung der geforderten Reichweiten- und Zielreflektivitätsbereiche entsprechend viele Abstufungen von Ausgangsleistung und/oder Eingangsverstärkung erforderlich sind.

Die oben angeführten bekannten Lösungen aus dem Stand der Technik sind daher in ihrer bekannten Form als unbefriedigend anzusehen, um den von Entfernungsmessern zu bewältigenden dynamischen Intensitätsbereich abzudecken, ohne dabei ein komplexes und aufwändiges Auswertesystem, insbesondere mit einer Vielzahl von Kalibrationsparametern, zu erhalten.

Es ist eine Aufgabe der vorliegenden Erfindung, einen optoelektronischen Distanzmesser zu verbessern, insbesondere eine Erhöhung der Robustheit der Messung in einem weiten Entfernungs- und Reflektivitätsbereich des zu messenden Zielobjekts.

Eine Aufgabe ist dabei, den Dynamikbereich der vom Empfänger erfassbaren Lichtintensität zu verbessern, insbesondere ohne dabei die Auflösung der Analog-Digitalwandlung zu erhöhen.

Die Verbesserung und Vereinfachung des Entfernungsmessers durch eine Vereinfachung der Kalibrierung ist eine weitere Aufgabe, speziell mit einer Reduktion der Anzahl der zu bestimmenden Kalibrierparameter.

Es ist auch eine Aufgabe, die Anzahl der notwendigen Betriebsmodi zu reduzieren, welche im Stand der Technik zur Abdeckung grosser Reichweitenbereiche und/oder Zielreflektivitäten erforderlich sind.

Als spezielle Aufgabe ist dabei insbesondere eine Empfangseinheit für einen Entfernungsmesser bereitzustellen, mit welchen in ein höherer Dynamikumfang des optischen Eingangssignals erfassbar ist.

Ein erfindungsgemässer elektrooptischer Entfernungsmesser, insbesondere ein Laser-Distanzmesser, auch als EDM (Elektronischer Distanz-Messer) oder LRF (Laser Range Finder) bezeichnet, ist zur erfindungsgemässen Lösung dieser Aufgaben aufgebaut mit
▪ einer Sendeeinheit mit einer Lichtquelle, insbesondere einem Halbleiterlaser oder einer LED, zur Aussendung von intensitätsmodulierter optischer Strahlung,
▪ einer Empfangseinheit zum Empfang eines von einem Zielobjekt zurückgeworfenen Anteils der optischen Strahlung durch ein photosensitives elektrisches Bauelement und zur Umwandlung in ein elektrisches Empfangssignal, insbesondere mit einer Photodiode, speziell einer APD oder PIN-Photodiode,
▪ einer Konditioniereinheit zur Konditionierung des Empfangssignals mit zumindest einer Verstärkerstufe,
▪ einem Analog-Digital-Wandler zur Digitalisierung des konditionierten Empfangssignals, und
▪ einer elektronischen Auswerteeinheit, welche derart ausgebildet ist, dass auf Basis einer Signallaufzeit anhand des digitalisierten Empfangssignals eine Distanz vom Entfernungsmesser zum Zielobjekt ermittelbar ist.

Erfindungsgemäss ist die Verstärkerstufe derart ausgebildet, dass diese eine nichtlineare Eingangs-Ausgangs-Charakteristik aufweist. Die Verstärkerstufe weist anders gesagt einen Verstärkungsfaktor auf, welcher von einem Amplitudenwert des Empfangssignals abhängig ist.

Es ist dabei nicht eine einfache Sättigung des Verstärkers zu verstehen, welche ausserhalb eines spezifizierten Betriebsbereichs liegt und per se bei allen bekannten Verstärkern auftritt, wie dies z.B. in EP 2 315 053 der Fall ist und zu einer nicht definierten Verzerrung der Signalform führt. Auch ist die Verstärkerstufe kein AGC, welcher eine dynamische Variation seines Verstärkungsfaktors zur Erzeilung eines konstanten Ausgangspegels ausführt, wie dieser etwa in US 5,428,439 angewandt wird. Auch eine Verstärkerstufe, welche extern angesteuert wird und, beispielsweise von der Auswerteeinheit, ein Umschalten des Verstärkungsfaktor erlaubt, ist nicht gemeint.

Die Verstärkerstufe weist die nichtlineare Eingangs-Ausgangs-Charakteristik unterhalb der Sättigung der Verstärkerstufe auf.

Speziell weist die Verstärkerstufe einen ersten Verstärkungsfaktor für einen ersten Amplitudenwert des Eingangssignals und zumindest einen vom ersten verschiedenen zweiten Verstärkungsfaktor für einen zweiten Amplitudenwert des Eingangssignals auf.

Die Verstärkerstufe im Sinne der Erfindung kann dabei auch mehrere verstärkende Elemente wie Transistoren oder Operationsverstärker aufweisen.

Die Verstärkerstufe kann für Empfangssignal-Amplituden unterhalb eines Schwellwertes einen ersten Verstärkungsfaktor aufweisen und für Empfangssignal-Amplituden über dem Schwellwert einen zweiten Verstärkungsfaktor aufweisen. Insbesondere kann die Verstärkerstufe derart ausgebildet sein, dass diese eine Amplituden-Dynamik-Kompression bewirkt, speziell wobei der Betrag des ersten Verstärkungsfaktors größer ist als jener des zweiten Verstärkungsfaktors.

Die Eingangs-Ausgangs-Charakteristik kann eine stückweise lineare Funktion sein, insbesondere mit zumindest einem Knickpunkt (welcher beim Schwellwert liegt) und zumindest zwei diskreten Verstärkungsfaktorbereichen mit jeweils konstantem Verstärkungsfaktor.

Die Eingangs-Ausgangs-Charakteristik kann eine stetige nichtlineare Funktion sein, insbesondere eine logarithmische, sinusförmige, exponentielle, parabolische oder durch ein Polynom dargestellte Funktion.

Die elektronische Auswerteeinheit kann derart ausgebildet sein, dass diese die Nichtlinearität der Verstärkerstufe numerisch kompensiert und eine lineare Darstellung des Empfangssignals wiederherstellt. Insbesondere kann das Ermitteln der Distanz mit einer numerischen Kompensationseinheit zum rechnerischen Annullieren der nichtlinearen Eingangs-Ausgangs-Charakteristik am digitalisierten Empfangssignal erfolgen, speziell anhand einer Inversen der nichtlinearen Charakteristik der Verstärkerstufe.

Die nichtlineare Eingangs-Ausgangs-Charakteristik kann durch eine nichtlineare Rückkopplung der Verstärkerstufe erfolgen, insbesondere wobei diese durch eine Sättigung eines Bauelements der Rückkopplung der Verstärkerstufe erreicht werden kann, wobei jedoch die Gesamtheit der Verstärkerstufe und das photosensitive Bauelement ungesättigt bleiben.

Die nichtlineare Rückkopplung kann mit einer Diode oder einer Z-Diode in einem Rückkopplungsnetzwerk erzielt werden, insbesondere durch deren spannungsabhängige Leitfähigkeit. Beispielsweise kann auch ein Varistor zu diesem Zweck eingesetzt werden.

Die nichtlineare Eingangs-Ausgangs-Charakteristik kann durch eine Komparatorschaltung erfolgen, welche derart ausgebildet ist, dass diese den Verstärkungsfaktor der Verstärkerstufe abhängig von einer Amplitude des Empfangssignals zwischen zumindest zwei Werten umschaltet.

Die Erfindung betrifft auch ein Beobachtungsgerät mit einem erfindungsgemässen Entfernungsmesser, welche eine optische Achse der Beobachtungsrichtung aufweist, welche zumindest annähernd parallel zur Messrichtung des Entfernungsmessers verläuft.

Die Erfindung betrifft ebenso ein Entfernungsmessverfahren mit
▪ einem Aussenden amplitudenmodulierter optischer Strahlung, insbesondere von Laserlicht,
▪ einem Empfangen eines Anteils der optischen Strahlung, welcher von einem Zielobjekt zurückgeworfen wird, mit einem photosensitiven elektrischen Bauelement, welches die empfangene optische Strahlung in ein elektrisches Empfangssignal umwandelt,
▪ einem Verstärken des Empfangsignals in einer Verstärkerstufe,
▪ einem Digitalisieren des verstärkten Empfangssignals mit einem Analog-Digital-Wandler, und
▪ einem Ermitteln einer Distanz vom Entfernungsmesser zum Zielobjekt auf Basis einer Signallaufzeit mit einem Auswerten des digitalisierten Empfangssignals mit einer elektronischen Auswerteeinheit.

Erfindungsgemäss erfolgt dabei das Verstärken des Empfangssignals mit einem Komprimieren der Amplitudendynamik durch eine Verstärkerstufe mit einer nichtlinearen Eingangs-Ausgangs-Charakteristik, insbesondere mit einem empfangssignalamplitudenabhängigen Verstärkungsfaktor, speziell mit einem degressiven Verstärkungsfaktor hin zu höheren Signalamplituden.

Das Verstärken kann mit einem ersten Verstärkungsfaktor A unterhalb eines Schwellwerts der Empfangssignalamplitude und mit einem zweiten Verstärkungsfaktor B oberhalb des Schwellwerts erfolgen, insbesondere wobei der erste Verstärkungsfaktor A größer ist als der zweite Verstärkungsfaktor B.

Das Verstärken kann mit einer Eingangs-Ausgangs-Charakteristik erfolgen, welche stückweise linear ist und zumindest einen Knickpunkt aufweist.

Das Auswerten des digitalisierten Empfangssignal kann mit einem numerischen Kompensieren der Nichtlinearität des Verstärkens erfolgen, insbesondere durch ein expandieren des digitalisierten Empfangssignals mit einer Inversen der nichtlinearen Eingangs-Ausgangs-Charakteristik zur Wiederherstellung einer linearen Darstellung des Empfangssignals.

Die Erfindung betrifft anders ausgedrückt auch ein Verfahren zur Erweiterung des erfassbaren Amplituden-Dynamikumfangs einer Empfangseinheit eines elektrooptischen Entfernungsmessers mit einem Komprimieren des Amplitudenbereichs eines Empfangssignals des Entfernungsmessers durch eine analoge, nichtlineare Verstärkerstufe und einem digitalisieren des komprimierten Amplitudenbereichs. Weiters kann ein numerisches Expandieren des digitalisierten Amplitudenbereichs zur Wiederherstellung einer linearen Darstellung des Empfangssignals für eine Entfernungsbestimmung durch eine Auswerteeinheit Teil des Verfahrens sein.

Die Erfindung betrifft auch ein Computerprogrammprodukt mit Programmcode, der auf einem maschinenlesbaren Träger gespeichert ist, oder ein Computer-Daten-Signal, verkörpert durch eine elektromagnetische Welle, zur Durchführung des obigen Verfahrens, insbesondere wobei der Programmcode eine numerisches Kompensieren einer nichtlinearen Verstärkung in einer Verstärkerstufe einer Empfangseinheit eines Entfernungsmessers durchführt, vorzugsweise, wenn der Programmcode in einer Auswerteeinheit eines elektrooptischen Entfernungsmesser mit nichtlinearer Verstärkerstufe ausgeführt wird.

Das erfindungsgemäße Verfahren und die erfindungsgemäße Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
Fig. 1 eine erste Ausführungsform eines erfindungsgemässen Entfernungsmessers als Block-Schema;
Fig. 2 eine beispielhafte Darstellung eines Anwendungsfalls eines erfindungsgemässen EDMs;
Fig. 3 eine Darstellung einer beispielhaften ersten erfindungsgemässen Ausführungsform einer Eingangs-Ausgangs-Kennlinie eines Verstärkers in einem EDM;
Fig. 4 eine Darstellung einer beispielhaften zweiten erfindungsgemässen Ausführungsform einer Eingangs-Ausgangs-Kennlinie eines Verstärkers in einem EDM;
Fig. 5 eine Darstellung einer beispielhaften dritten erfindungsgemässen Ausführungsform einer Eingangs-Ausgangs-Kennlinie eines Verstärkers in einem EDM;
Fig. 6 eine Darstellung einer beispielhaften vierten erfindungsgemässen Ausführungsform einer Eingangs-Ausgangs-Kennlinie eines Verstärkers in einem EDM;
Fig. 7a eine beispielhafte Darstellung einer ersten schaltungstechnischen Ausführungsform einer erfindungsgemässen Verstärkerstufe eines EDMs mit deren Eingangs-Ausgangs-Kennlinie;
Fig. 7b eine beispielhafte Darstellung einer zweiten schaltungstechnischen Ausführungsform einer erfindungsgemässen Verstärkerstufe eines EDMs mit deren Eingangs-Ausgangs-Kennlinie;
Fig. 7c eine beispielhafte Darstellung einer dritten schaltungstechnischen Ausführungsform einer erfindungsgemässen Verstärkerstufe eines EDMs mit deren Eingangs-Ausgangs-Kennlinie;
Fig. 8 eine beispielhafte, schematische Darstellung einer vierten schaltungstechnischen Ausführungsform einer erfindungsgemässen Verstärkerstufe;
Fig. 9 eine beispielhafte, schematische Darstellung einer fünften schaltungstechnischen Ausführungsform einer erfindungsgemässen Verstärkerstufe;
Fig. 10 eine beispielhafte, schematische Darstellung einer sechsten schaltungstechnischen Ausführungsform einer erfindungsgemässen Verstärkerstufe;
Fig. 11a eine beispielhafte, schematische Darstellung einer siebten schaltungstechnischen Ausführungsform einer erfindungsgemässen Verstärkerstufe.
Fig. 11b eine beispielhafte, schematische Darstellung einer achten schaltungstechnischen Ausführungsform einer erfindungsgemässen Verstärkerstufe.
Fig. 12 eine beispielhaftes Elektroschema einer weiteren schaltungstechnischen Ausführungsform einer erfindungsgemässen Verstärkerstufe.

Die Darstellungen in den Figuren dienen lediglich zur Illustration und sind nicht als maßstäblich zu betrachten. Die dargestellten Schaltschemata zeigen jeweils die schaltungstechnische Grundstruktur, welche von einem Fachmann entsprechend allgemeinen Grundsätzen der Elektronikentwicklung ergänzt oder modifiziert werden können.

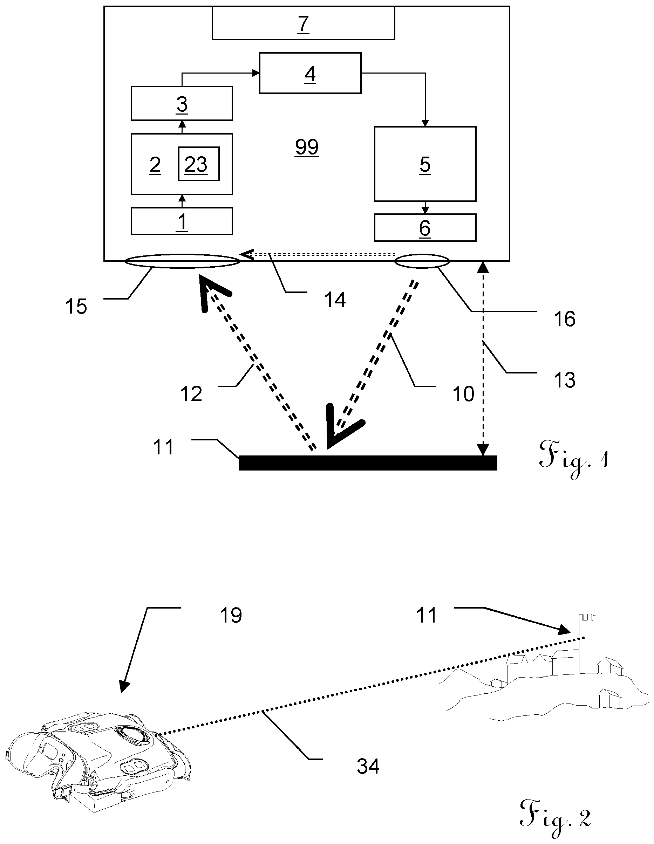

Fig. 1 zeigt eine Ausführungsform eines erfindungsgemäßen optoelektronischen Distanzmesser 99 als Blockdiagramm. Es kann sich dabei beispielsweise um einen in ein Beobachtungsgerät eingebauten, batteriebetriebenen Entfernungsmesser handeln, welcher zum Anzielen und Bestimmen von Zielkoordinaten eines Zielobjekts 11 benutzt werden kann. Das erfindungsgemässe Prinzip kann aber auch bei Distanzmessern in anderen Vermessungsgeräten angewandt werden.

In der rechten Hälfte des Distanzmesser-Blocks 99 ist die Sendeeinheit dargestellt, und in der linken Hälfte die Empfangseinheit. Die hier beschriebene Trennung der beiden Einheiten ist dabei primär funktionell zu sehen und kann (muss aber nicht) in Form von zwei physisch getrennten Einheiten aufgebaut sein. Es können Ausführungsformen, bei denen beide Einheiten auf einer gemeinsamen Leiterplatte untergebracht sind, ebenso wie Ausführungsformen, bei welchen die Komponenten der Distanzmessung auf mehrere, auch räumlich getrennt angeordnete, Leiterplatten aufgeteilt sind, realisiert werden.

Das Zielobjekt 11, dessen Distanz 13 zu bestimmen ist, wirft zumindest einen Teil der von der Sendeeinheit emittierten elektromagnetischen Strahlung 10 als Empfangsstrahlung 12 zur Empfangseinheit zurück. Ein Teil der emittierten Strahlung kann dabei auch als Referenzstrahl 14 über einen Referenzpfad bekannter Länge zur Empfangseinheit geführt werden. Dabei kann für den Referenzstrahl 14 und den Messstrahl 10 je eine eigene oder auch eine gemeinsame Empfangseinheit vorgesehen sein. Bei einem dezidierten Referenzempfänger sind die Empfangseinheit oder Teile davon entsprechend doppelt auszuführen. Auch eine Umschaltung der Strahlführung zwischen Referenz- 14 und Messstrahl 10 ist möglich, etwa durch eine geräteinterne oder extern anbringbare Referenz-Umlenkeinrichtung. Es kann sich aber auch um einen Entfernungsmesser ohne optischen Referenzpfad handeln.

Durch das in Fig. 1 unproportional nahe dargestellte Zielobjekt 11, sind der Sende- 10 und Empfangstrahl 12 in einem ungewöhnlich steilen Winkel zueinander dargestellt. In praktischen Ausführungsformen sind die Sende- und Empfangsstrahlengänge (also deren optische Achsen) derart ausgerichtet, dass diese sich in einer vorgegebenen Distanz schneiden, insbesondere bei grösseren Messdistanz-Reichweiten können diese als annähernd parallel zueinander angesehen werden. Auch sind Ausführungsformen mit speziellen, winkelabhängig verzerrenden Optiken beim Empfänger bekannt, um einen weiten Distanzbereich abdecken zu können. Es sind auch Ausführungsformen mit koaxialen optischen Achsen der Sende- und Empfangsstrahlengänge bekannt, beispielsweise durch Einspiegeln des Sendestrahls 10 in den Bereich des Zentrums der Empfangslinse 15.

Im Entfernungsmesser 99 ist jeweils ein Blockschema eines beispielhaften internen Aufbaus einer Ausführungsform der Sende- und Empfangeinheit dargestellt, auf welche nun beispielhaft eingegangen wird.

Die beispielhaft gezeigte Ausführungsform der Sendeeinheit weist einen Steuerungsprozessor 4 und eine Treiberstufe 5 für die lichtemittierende Komponente 6 auf, welche die elektrischen Signale der Treiberstufe 5 in elektromagnetische Strahlung 10,14 umwandelt. Als Lichtemitter 6 können beispielsweise Halbleiterlichtquellen, z.B. Halbleiterlaser, halbleitergepumpte Laser oder Leuchtdioden eingesetzt werden. Das emittierte Licht ist durch eine Optik 16 zu einem gerichteten Strahl 10 mit geringer Divergenz gebündelt. Die Treiberstufe 5 ist dabei den Emissionscharakteristiken der Lichtquelle 6 angepasst, um die intensitätsmodulierte optische Sendestrahlung 10 zu erzeugen. Dabei kann die Intensität der emittierten Lichtsignale 10 von der Steuereinheit 4 vorgegeben werden, beispielsweise in mehreren diskreten Stufen oder auch kontinuierlich. Eine derartige Variation der optischen Ausgangsleistung kann - wie bereits erläutert - angewandt werden, um, je nachdem wieviel des gesendeten Lichts 10 empfangen wird, ein Empfangsignal in einem von der Empfängereinheit auswertbaren Intensitätsbereich zu erhalten, insbesondere in einem vorteilhaft auswertbaren Intensitätsbereich, wie dieser im Folgenden erläutert wird.

Ist das Empfangssignal beispielsweise sehr schwach gegenüber dem Signalrauschen, oder gar nicht detektierbar, so kann die Intensität des Sendesignals (z.B. stufenweise) erhöht werden, bis eine Bestimmung der Distanz möglich ist. Umgekehrt kann im Falle einer Übersteuerung des Empfängers die Emissionsleistung zurückgefahren werden bis keine Sättigung der Eingangsschaltung mehr auftritt. Eine derartige Einregelung zur Findung des geeigneten Betriebsmodus des Senders benötigt Zeit und Energie, da während dieser kein oder nur eine ungenaue Distanzmessung durchgeführt werden kann. Da das Verändern der Emissionsleistung auch mit anderen, parasitären Effekten einhergeht, kann die Ausgangsleistung zwischen diskreten Stufen variiert werden, für welche eine zumindest teilweise Kompensation der parasitären Effekte anhand von Kalibrierparametern durchgeführt werden kann. Die dazu nötigen Kalibrierparameter müssen jeweils für die entsprechende Sendeleistung (es wird hierbei auch von senderseitigen Betriebsmodi gesprochen) entsprechend vorherbestimmt werden.

Speziell aufgrund der starken Temperaturabhängigkeit der Emissionsleistung von Laserdioden kann die Treiberstufe 5 einen Regelkreis zur Einhaltung der gewünschten optischen Sendeleistung enthalten, welche beispielsweise mit einer Monitor-Photodiode überwacht wird. Auch kann die Einhaltung von Sicherheitsauflagen, etwa die Einhaltung von Augensicherheitsrichtlinien, von der Lasertreiberstufe 5 wahrgenommen werden.

Der Steuerprozessor 4 kann in der gezeigten Ausführungsform sowohl der Sende- als auch der Empfangseinheit zugerechnet werden und steuert die Abläufe zur Bestimmung der Distanz. In anderen Ausführungsformen können auch mehrere Steuerprozessoren 4 angewandt werden, welche jeweils spezielle Teilaufgaben übernehmen. Der Steuerprozessor 4 kann beispielsweise ein Digitalrechner, wie etwa ein Mikroprozessor oder DSP, sein, kann aber auch als FPGA oder ASIC oder mit zumindest teilweise festverdrahteter Logik ausgeführt sein.

Der Block 7 stellt die Spannungsversorgung des Entfernungsmessers dar, welche neben Versorgungsfiltern gegebenenfalls auch eine Spannungsstabilisierung bzw. -regelung oder einen Hoch- oder Tiefsetzsteller enthalten. Die Spannungsversorgung kann über Batterien, Akkus oder andere geräteinterne oder -externe elektrische Energiequellen erfolgen.

Die Empfangseinheit wandelt empfangene elektromagnetische Strahlung 12 mit dem Empfangselement 1 in ein elektrisches Signal um, welches im Block 2, als Konditioniereinheit für die Weiterverarbeitung konditioniert wird. Die Konditionierung kann ein Impedanzwandeln, Filtern, Verstärken, Bandbegrenzen, heterodynes oder homodynes Mischen etc. umfassen. Die Konditioniereinheit 2 kann also beispielsweise ein Eingangsfilter, ein (Transimpedanz-) Verstärker, eine Mischstufe, ein Sample&Hold-Glied etc. umfassen, oder auch eine Kombination von diesen. Die Konditioniereinheit 2 weist erfindungsgemäss zumindest eine nichtlineare Verstärkerstufe 23 auf. Der Empfänger 1 der optischen Strahlung 12 kann als Empfangselement eine Photodiode verwenden, beispielsweise eine PIN- oder eine Avalanche-Photodiode (APD) mit entsprechender Vorspannung. Durch Variation der Vorspannung der APD kann deren Verstärkungsverhältnis vom optischen Signal hin zum elektrischen Signal eingestellt werden. Bei APDs erhöht sich mit der Vorspannung jedoch nicht nur die Verstärkung, sondern auch das Rauschen.

Eine Anpassung der Eingangsempfindlichkeit kann auch durch eine Veränderung der Verstärkung von der photoelektrischen Wandlung nachfolgenden Verstärkerstufen erreicht werden, welche ebenfalls oder zusätzlich in ihren Verstärkungsfaktoren variiert werden können. Beim Einsatz von PIN-Photodioden wird die Eingangsempfindlichkeit beispielsweise über den Verstärkungsfaktor der nachfolgenden Verstärkerstufe den optischen Eingangsverhältnissen angepasst.

Da eine Variation der Vorspannung und/oder der Verstärkung auch Auswirkungen auf andere Parameter, etwa die Bandbreite, die Signalverzögerung etc. hat, kann auch hier für unterschiedliche Einstellungen jeweils eine Kalibrierung der Distanzmessung angebracht sein. Deshalb werden auch hier meist festgelegte, diskrete Stufen als Betriebsmodi angewandt.

Beispielsweise aus US 3,900,261 sind auch so genannte AGC-(Auto-Gain-Control) Regelkreise bekannt, welche die Verstärkung des empfangenen Signals automatisch derart anpassen, dass deren Ausgangssignal konstant ist. Diese Technologie wird beispielsweise in der Informationsübertragungstechnik in den Empfängerschaltungen angewandt, speziell bei der Funkübertragung von frequenzmodulierten Signalen. Unter konstantem Ausgangssignal kann bei diesen AGCs - je nach Ausführungsform - eine konstante Amplitude der Signal-Hüllkurve, eine konstante mittlere Signalleistung, ein konstanter RMS-Wert des Signals oder auch eine logarithmische Bewertung des Signals als Konstanz-Kriterium angewandt werden. Da diese Schaltungen Regelkreise darstellen, können diese gattungsgemässe Probleme bezüglich des Regelverhaltens bereiten, (Führungsverhalten, Störungsverhalten, Schwingungsneigung, sogenanntes Pumpen des AGC-Reglers etc.). Die AGC-Kreise müssen entsprechend in ihrer Bandbreite und den Regelparametern auf das jeweilige System abgestimmt sein. Bei den in EDMs angewandten, hohen Signalfrequenzen und deren Sensitivität auf Laufzeitänderungen in der Elektronik, kann sich das Auslegen eines AGC-Reglers schwierig gestalten. Insbesondere da bei dem hier beschriebenen EDM-System kein kontinuierliches Empfangssignal (wie beispielsweise bei FMmodulierten Rundfunksignalen) vorherrscht, sondern Einzelpulse oder Pulspakete empfangen werden, ist eine derartige AGC-Schaltung hier nicht direkt anwendbar.

Die mit der Veränderung des Verstärkungsfaktors des AGCs einhergehenden, parasitären Auswirkungen auf das Signal sind gegenüber einer manuell abgestuften Verstärkungsvariation insofern nachteilig, als dass eine Kalibrierung dieser Effekte von der "nicht bekannten" Verstärkung des AGCs oder dessen dynamischem Status abhängt. Hinsichtlich eines einfachen Kalibriervorgangs ist deshalb eine von der Steuereinheit vorgegebene Verstärkungsvariation in bekannten Stufen einer dynamischen, der Auswerteeinheit unbekannten, Verstärkungsfaktorvariation eines AGCs vorzuziehen.

Erfindungsgemäss wird der EDM verbessert, indem eine hohe dynamische Reichweite der Eingangssignalintensität erfassbar und zur Distanzmessung nutzbar gemacht wird. Die Amplituden-Dynamik der Empfangseinheit des EDMs wird somit verbessert, bzw. wird die Auswertung eines weiten Intensitätsbereichs des zurückgeworfenen Messsignals vereinfacht. Dies wird erfindungsgemäss erreicht, indem ein Verstärker eingesetzt wird, welcher eine nichtlineare Eingangs-Ausgangs-Kennlinie hat. Die Verstärkung ist dabei degressiv, sodass niedrige Amplitudewerte des Eingangssignals eine höhere Verstärkung erfahren als höhere Amplitudenwerte. Es wird somit eine Art Kompression der höheren Amplitudenwerte erreicht.

Erfindungsgemäss kann ein im Gegensatz zum Stand der Technik grösserer Dynamikbereich abgedeckt werden, ohne dass dabei ein Wechsel des Betriebsmodus in der Sende- und/oder Empfangseinheit durchgeführt werden muss.

Es kann erfindungsgemäss auch bei gleicher ADC-Werteauflösung ein grösserer Eingangsamplitudenbereich erfasst werden. Um im Empfänger eine höhere Eingangsdynamik zu erreichen, könnte auch ein Analog-Digital-Wandler mit höherer Amplitudenauflösung genutzt werden. Ein solcher hat jedoch einen höheren Stromverbrauch und ist deutlich teurer als niedrigauflösendere Modelle, speziell wenn eine hohe Zeitauflösung in Form einer hohen Samplingrate erforderlich ist. Zudem steigt mit höheren Auflösungen auch der Rechenaufwand zur Weiterverarbeitung und Distanzermittlung, speziell wenn es dabei zu Überschreitungen der nativen Auflösung des verwendeten Digitalrechners (Prozessors, DSP, ...) von z.B. 16, 24 oder 32 Bit kommt, welche dann entsprechend umständlich und zeitraubend in Software gehandhabt werden müssen.

Im Rahmen der anschliessenden digitalen Weiterverarbeitung der Messwerte kann diese Nichtlinearität auch numerisch rückgängig gemacht werden, wodurch bei der Signalauswertung und Distanzermittlung wiederum mit linearen Messwerten gearbeitet werden kann, falls das Auswertekonzept dies erfordert. Eine derartige digitale "Verstärkung" oder Expansion der zuvor analog im nichtlinearen Verstärker "abgeschwächten" oder komprimierten Signale, bewirkt keine zeitliche Verschiebung mehr, da dies nach dem zeitquantisierenden Abtasten erfolgt.

Allfällige Verschiebungen im Phasengang oder der Signalverzögerungen der erfindungsgemässen nichtlinearen Verstärkerstufe können weiterhin anhand von Kalibrierparametern ausgeglichen werden, wobei im Gegensatz zum Stand der Technik nunmehr der gesamte Eingangsbereich mit weniger Kalibrierparametern abgedeckt werden kann.

Der erfindungsgemäss erhöhte, vom Empfänger erfassbare Intensitätsbereich kann auch das Erfassen eines mit einer fixen Auskoppelrate vom Sender abgezweigten Referenzsignals durch die Empfängereinheit vereinfachen, da erfindungsgemäss der Bereich zwischen höchster und niedrigster zur Distanzmessung nutzbaren Intensität des empfangenen Lichts vergrössert wird.

Das - entsprechend der Modulation des ausgesendeten optischen Signals (und somit auch des empfangenen optischen Signals) - hochfrequente elektrische Ausgangs- oder Empfangssignal des photosensitiven Elements 1 kann vor der weiteren Verarbeitung und Konditionierung 2 aufbereitet werden, insbesondere impedanzgewandelt, verstärkt, gefiltert und/oder bandbegrenzt werden. Beispielsweise kann eine solche Verstärkerstufe unter anderem auch mit einer Schaltung nach EP 2 183 865 aufgebaut werden. Ein Beispiel für eine der vielen möglichen Signalfilterungen im Rahmen der Konditionierung 2 ist etwa in WO 2011/076907 gezeigt. Es kann auch ein zuvor beschriebener Betriebsmodus-Wechsel vorgesehen werden, beispielsweise durch Änderung einer APD-Vorspannung, oder eines Verstärkungsfaktors, wobei dies von der Auswerteeinheit ausgelöst wird und nicht eine erfindungsgemäße Verstärkerstufe mit einer nichtlinearen Eingangs-Ausgangs-Charakteristik darstellt.

Das konditionierte Empfangssignal wird von einem Analog-Digital-Wandler 3 digitalisiert also Zeit und Wert quantifiziert - und einer digitalen Recheneinheit 4 (einem Mikroprozessor, DSP, FPGA, ASIC, etc.) zur Weiterverarbeitung und Bestimmung der Distanz zugeführt. Gegebenenfalls kann das EDM-System mit einem zusätzlichen externen Prozessor, Mikrocontroller oder DSP ausgestattet sein, welcher speziell Auswerte- oder Interfacing-Aufgaben übernehmen kann, beispielsweise die Bereitstellung eines Bedieninterfaces oder einer Kommunikationsschnittstelle.

Mit dem erfindungsgemäßen Prinzip kann eine Verarbeitung von starken und schwachen Empfangssignalen durchgeführt werden. Daher können auch Lichtsignale, welche stark unterschiedliche Intensitäten aufweisen, erfasst werden, was beispielsweise auch ein Bestimmen von Distanzen von mehreren Zielen in unterschiedlichen Entfernungen und mit unterschiedlichen Reflektivitäten, welche sich entlang der Messrichtung befinden, ermöglichen kann. Durch einen im Stand der Technik gebräuchlichen Wechsel des (sender- oder empfängerseitigen) Betriebsmodus, bei dem das Vermeiden einer Sättigung des Empfängers aufgrund des am dominantesten reflektierenden Ziels das Einstellkriterium darstellt, können die Signale schwächer reflektierender Ziele im Rauschen untergehen und daher undetektierbar sein. Ein Beispiel hierzu stellt auch ein mit einem fixen Anteil ausgekoppeltes Referenzsignal dar, welches erfindungsgemäß auch ohne Sättigung des Empfängers gemeinsam mit einem weiteren Bereich von Empfangssignalen detektierbar ist.

Fig. 2 zeigt einen beispielhaften Einsatz eines erfindungsgemässen Entfernungsmessers 99 in einem Beobachtungsgerät 19, welches zur Anzielung eines Zielobjekts 11 und Bestimmung dessen Distanz 13 zum Beobachter eingesetzt werden kann. Das Beobachtungsgerät hat dabei eine Beobachtungsrichtung, welche zumindest annähernd mit der Messrichtung der Distanzmessung übereinstimmt, sodass mit dem Entfernungsmesser 99 eine Distanz zu einem beobachteten Zielpunkt 11 ermittelt werden kann. Beispielsweise kann zudem mittels Neigungssensoren im Beobachtungsgerät (oder in einem das Beobachtungsgerät tragenden Stativ) eine Neigung der Messrichtung gegenüber der Horizontalen ermittelt werden, beispielsweise um eine Horizontalprojektion der vom EDM bestimmten Distanz 13 zu ermitteln. Auch kann beispielsweise mit einem Kompass oder einer vertikalen Winkelmessung im Beobachtungsgerät oder Stativ eine azimutale Messrichtung bestimmt werden. Das Gerät kann somit beispielsweise zur Bestimmung von geographischen Koordinaten des Zielobjekts 11 eingesetzt werden.

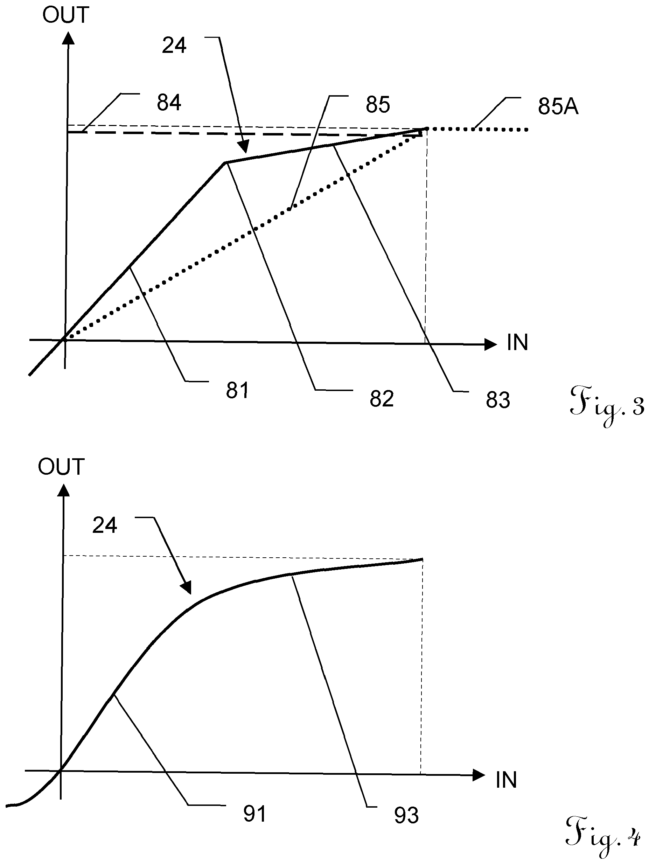

Fig. 3 zeigt eine beispielhafte Eingangs-Ausgangs-Kennlinie einer erfindungsgemässen Verstärkerstufe 2, wobei auf der Abszisse (mit IN bezeichnet) der Pegel des Eingangssignals - also die Intensität des optischen Empfangssignals 12 - dargestellt ist, und auf der Ordinate (mit OUT bezeichnet) der Pegel des Ausgangssignals der Verstärkerstufe 23 dargestellt ist. Unter Pegel kann beispielsweise ein elektrischer Spannungswert verstanden werden, gegebenenfalls aber auch ein Stromwert oder die optische Empfangsintensität. Die dargestellte nichtlineare Verstärker-Kennlinie 24 dieser Ausführungsform weist eine stückweise lineare Verstärkung auf, mit einem ersten Verstärkungsfaktor 81 und einem zum ersten unterschiedlichen zweiten Verstärkungsfaktor 83, welche bei einem Knickpunkt 82 bei einem Schwellwert des Eingangssignals ineinander übergehen. Der Verstärkungsfaktor entspricht jeweils der Steigung der Kennlinie. Unter Verstärkung ist hierbei auch ein Verstärkungsfaktor von kleiner eins oder auch ein negativer Verstärkungswert verstanden (was auch als Dämpfung oder invertierender Verstärker bezeichnet wird). In der dargestellten Ausführungsform ist der Verstärkungsfaktor für niedrige Eingangssignale unter dem Schwellwert beim Knickpunkt 82 grösser als jener über dem Knickpunkt. Somit wird die Signaldynamik komprimiert, also ein Eingangswertebereich nichtlinear auf einen Ausgangswertebereich abgebildet, insbesondere wobei das Abbilden mit einem multiplikativen Faktor beschrieben werden kann, welcher hin zu höheren Eingangswerten betragsmässig degressiv ist. Dabei geht bei der Definition des höheren Eingangssignal in einer elektronischen Schaltung das elektrische Eingangssignal der Verstärkerstufe nicht zwingend mit einem absolut gesehen höheren Strom- oder Spannungswert einher, da das elektrische Eingangssignal gegenüber der empfangenen optischen Signalintensität beispielsweise invertiert und/oder mit einem positiven oder negativen Bias vorgespannt sein kann. Der Begriff "höher" ist in solchen Fällen vielmehr als eine grössere Abweichung relativ zu einem Grundzustand des Signals anzusehen.

In einer anderen Ausführungsform können auch mehrere derartige Knickpunkte und weitere Verstärkungsfaktoren vorhanden sein.

In Fig. 3 ist auch die zweite Eingangs-Ausgangs-Charakteristik 85 einer gewöhnlichen linearen Verstärkerstufe aus dem Stand der Technik als gepunktete Linie dargestellt. Die dabei gezeigte Sättigung 85A der Verstärkerstufe bei Übersteuerung des Eingangs ist dabei nicht als nichtlineare Charakteristik im Sinne der vorliegenden Erfindung anzusehen, speziell da diese ausserhalb des spezifizierten Betriebsbereichs liegt und bei Signalen über dem Sättigungswert auch keine Verstärkung mehr auftritt, was beispielsweise ein numerisches Rückgängigmachen der Kompression verunmöglicht, da im Übersteuerungsbereich keine eindeutige Zuordnung der Mess- und Eingangswerte möglich ist. Es handelt sich dabei vielmehr um einen parasitären Effekt, welcher bei jeder Verstärkerschaltung auftritt, dort jedoch nicht ohne weitere Vorkehrungen erfindungsgemäss zur Kompression eingesetzt wird bzw. eingesetzt werden kann. Erfindungsgemäss ist der erste und zweite Verstärkungsfaktor innerhalb des Betriebsbereichs ungleich Null. Die erfindungsgemässe nichtlineare Eingangs-Ausgangs-Charakteristik 24 bildet im spezifizierten Betriebsbereich ein Eingangssignal der Verstärkerstufe 23 eindeutig auf ein Ausgangssignal der Verstärkerstufe 23 ab. Der Anschaulichkeit halber ist eine nichtinvertierende Verstärkerstufe mit Bias-Werten von Null dargestellt, in praktischen Ausführungsformen können sowohl ein Bias bedingter Versatz der Kennlinie als auch eine Spiegelungen der Kennlinie durch eine invertierende Verstärkerstufen auftreten.

Die mit einer unterbrochenen Linie dargestellte dritte Eingangs-Ausgangs-Charakteristik 84 ist jene eines idealisierten AGCs, welcher den Ausgangssignalpegel unabhängig vom Eingangssignalpegel auf einen konstanten Wert ausregelt, oder dies zumindest versucht.

Fig. 4 stellt eine Ausführungsform einer erfindungsgemässen Eingangs-Ausgangs-Charakteristik 24 dar, welche ebenfalls eine Kompression bewirkt, aber keinen unstetigen Knickpunkt sondern einen stetigen Verlauf aufweist. Es ist wiederum ein erster Teilbereich 91 für niedrige Eingangssignale mit einem höheren Verstärkungsfaktor als der zweite Teilbereich 93 für grössere Eingangssignale dargestellt. Der Übergang zwischen den Teilbereichen erfolgt hierbei fliessend oder stetig.

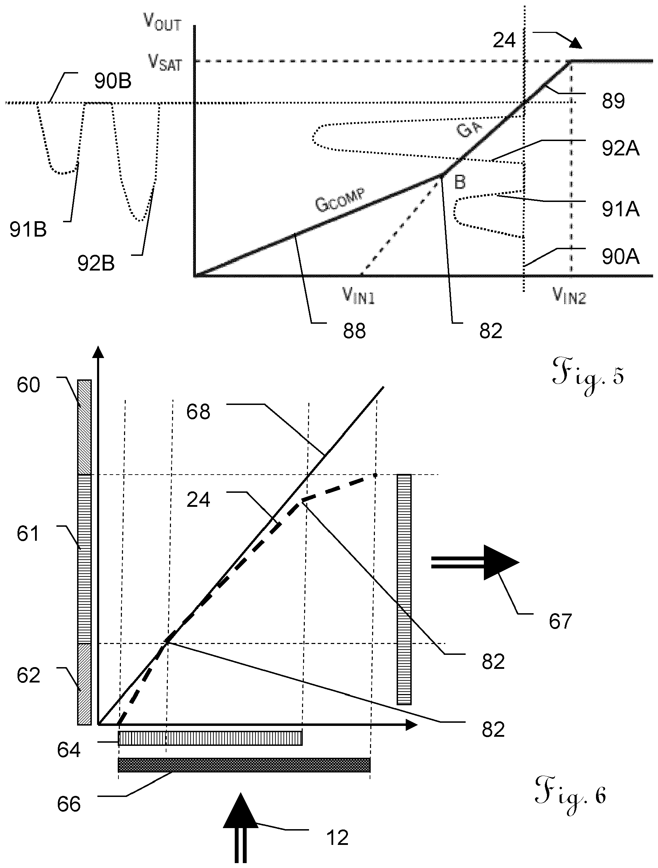

Fig. 5 stellt eine weitere Ausführungsform einer erfindungsgemässen Eingangs-Ausgangs-Charakteristik 24 dar, welche ebenfalls eine Kompression bewirkt, aber für ein invertiertes, biasbehaftetes Eingangssignal ausgelegt ist. Diese wird anhand der beispielhaften Signalpulse 91A und 92A welche an die nichtlineare Verstärkerstufe 23 angelegt werden, und welche einen Bias-Offset 90A aufweisen. Der Verlauf der Nichtlinearität ist wiederum stückweise linear, mit einem unstetigen Knickpunkt 82 und zwei unterschiedlichen Verstärkungswerten 88 und 89. Das Verhalten der Verstärkerstufe 23 mit der Kennlinie 24 ist anhand der beiden Eingangspulse 91A bzw. 92A, welche zum jeweiligen Ausgangspuls 91B bzw. 92B mit dem Ausgangs-Bias 90B geformt werden, gezeigt.

Der Knickpunkt bei der Sättigung des Verstärkers VSAT sollte im normalen Betriebsfall nicht erreicht werden, bzw. es sollte in einem solchen Fall ein Betriebsmoduswechsel auf der Sender- und/oder Empfängerseite vorgenommen werden, um eine Übersteuerung zu vermeiden. Der Knickpunkt bei VSAT ist auch nicht als erfindungsgemässer Knickpunkt anzusehen, da nach diesem ein Verstärkungsfaktor von Null vorherrscht, wodurch Signalpegel über VIN2 nicht mehr voneinander unterschieden werden können.

Fig. 6 illustriert den erfindungsgemäss erweiterten erfassbaren Amplitudendynamikbereich einer EDM-Empfangseinheit anhand eines Vergleichs einer bekannten linearen Verstärkerstufe mit einer Ausführungsform einer erfindungsgemässen nichtlinearen (bzw. stückweise linearen) Verstärkerstufe. Auf der Ordinate sind die Amplituden der Signale bei der Digitalisierung dargestellt, welche in drei Bereiche aufgeteilt sind. Der obere Bereich 60 stellt eine Übersteuerung des ADCs dar, in welchem die Signale nicht erfasst werden können, sondern lediglich der Sättigungswert des ADCs ausgegeben wird. Der mittlere Bereich 61 ist der eigentliche Messbereich des ADCs, in welchem die Signalpegel ausgewertet und gewandelt werden können, und welche als digitale Eingangsrepräsentation 67 effektiv zur Weiterverarbeitung und Distanzmessung nutzbar sind. Der untere Bereich 62 stellt den Bereich des Rauschens dar. Bei entsprechenden Auswertekonzepten zur Ermittlung der Distanz kann, beispielsweise durch Akkumulation von Messwerten aus mehreren Messungen, unkorreliertes Rauschen ausgemittelt werden und somit auch die korrelierten Messsignale, welche unterhalb des Rauschpegels liegen, zumindest teilweise detektierbar gemacht werden.

Im Diagramm ist die klassische lineare Eingangs-Ausgangs-Charakteristik 68 einer linearen Verstärkerstufe aus dem Stand der Technik gezeigt, aus welcher sich der damit erfassbare Empfangssignalbereich 64 auf der Ordinate, welche die Intensität des optischen Eingangssignals des Distanzmessers darstellt, ergibt.

Eine beispielhafte erfindungsgemässe nichtlineare Eingangs-Ausgangs-Charakteristik 24 ergibt im Gegensatz zum Stand der Technik einen grösseren erfassbaren Eingangsbereich 66, welcher durch die Nichtlinearität und die Knickpunkte 82 in der Charakteristik 24 bewirkt wird. Der hier dargestellte untere Knickpunkt 82 ist optional.

In der folgenden Auswertung des digitalisierten Signals zur Bestimmung der Distanz in einer Auswerteeinheit (z.B. einer digitalen Recheneinheit, CPU, DSP, FPGA, ASIC etc.), kann die Nichtlinearität der Verstärkerstufe 23 numerisch wieder rückgängig gemacht werden, falls das Auswertekonzept eine lineare Signaldarstellung erfordert. Es ist somit erfindungsgemäss ein grösserer Amplituden-Bereich des empfangenen Signals erfassbar, ohne dass der Betriebsmodus des Empfängers gewechselt werden muss (bzw. sind entsprechend weniger Betriebsmoduswechsel auf der Senderseite erforderlich). Der Preis einer dadurch bewirkten, geringeren Amplitudenauflösung in Teilbereichen des digitalisierten Signals kann bei entsprechender Auslegung des EDM-Systems vernachlässigt bzw. wettgemacht werden.

Zur elektronischen Realisierung des erfindungsgemässen nichtlinearen Verstärkers 23 in einem EDM sind mehrere schaltungstechnische Ansatzpunkte möglich, welche anhand der folgenden Figuren erläutert werden, wobei die dabei gezeigten Ausgestaltungen nicht als abschließende Aufzählung zu betrachten ist. Es sind dabei lediglich die Grundschaltungen zur Herstellung der Übertragungscharakteristik dargestellt, praktische schaltungstechnische Ausführungen sind gegebenenfalls entsprechend zu erweitern. Der mit dem Gebiet der Elektrotechnik vertraute Fachmann kann die entsprechenden mathematischen Darstellungen der Charakteristiken herleiten bzw. durch numerische Simulationen ermitteln. Beispielsweise sind bei den hier aufgeführten Schaltungen Temperaturkompensationsschaltungen oder andere Schaltungen zur Verminderung von Fehlereinflüssen anwendbar, auf deren Darstellung hier der Anschaulichkeit halber verzichtet wird.

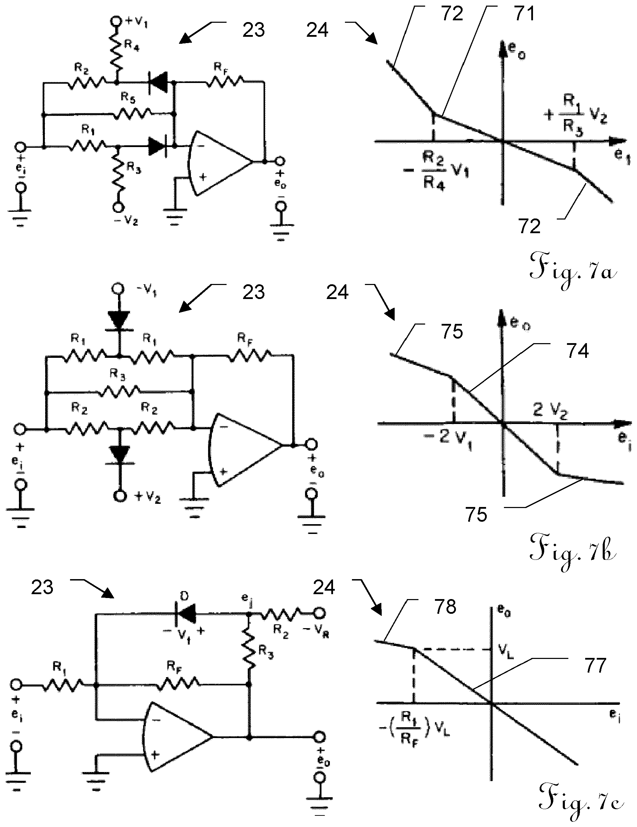

Fig. 7a zeigt links ein erstes Schaltbild einer Verstärkerstufe 23 mit einer sogenannten Serien-Limiter-Schaltung und rechts daneben die damit erzielte nichtlineare Eingangs-Ausgangs-Charakteristik 24. Die dargestellte Ausführungsform wirkt invertierend mit einem progressiven Verstärkungsfaktor, bei welcher eine erste Verstärkung 71 für niedrige Eingangssignale eᵢ geringer ist als die zweite Verstärkung 72 für höhere. Da die gängigen elektrooptischen Empfangselemente keine negativen Ausgangssignale generieren, kann in dem hier beschriebenen Anwendungsfall der negative Eingangssignalbereich vernachlässigt werden, sofern nicht entsprechende Massnahmen, wie beispielsweise Biasing, Hochpassfilterung etc. angewandt werden. Um nur einen Knickpunkt zu erzielen, kann auch einer der beiden Diodenzweige weggelassen werden. Beispielsweise kann mit dieser Schaltung die Kennlinie aus Fig. 5 realisiert werden.

Fig. 7b zeigt links ein zweites Schaltbild einer Verstärkerstufe 23 mit einer sogenannten Shunt-Limiter-Schaltung und rechts daneben die damit erzielte nichtlineare Eingangs-Ausgangs-Charakteristik 24. Die dargestellte Ausführungsform wirkt invertierend mit einem degressiven Verstärkungsfaktor, es ist also die Verstärkung 74 grösser als die Verstärkung 75. Um nur einen Knickpunkt zu erzielen, kann auch einer der beiden Diodenzweige weggelassen werden.

Fig. 7c zeigt links ein zweites Schaltbild einer Verstärkerstufe 23 mit einer sogenannten Feedback-Limiter-Schaltung und rechts daneben die damit erzielte nichtlineare Eingangs-Ausgangs-Charakteristik 24. Die dargestellte Ausführungsform kann invertierend betrieben werden und durch weitere Massnahmen (beispielsweise durch eine vorgeschaltete und/oder nachgeschaltete Signalinversion, entsprechende Eingangspolung, Biasing etc.) kann die invertierende Wirkung rückgängig gemacht werden. Die gezeigte Ausführungsform hat eine degressive Verstärkungskennlinie 24 mit einer grossen Verstärkung 77 für kleine Eingangssignale eᵢ und eine im Gegensatz dazu kleinere Verstärkung 78 für grosse Eingangssignale eᵢ.

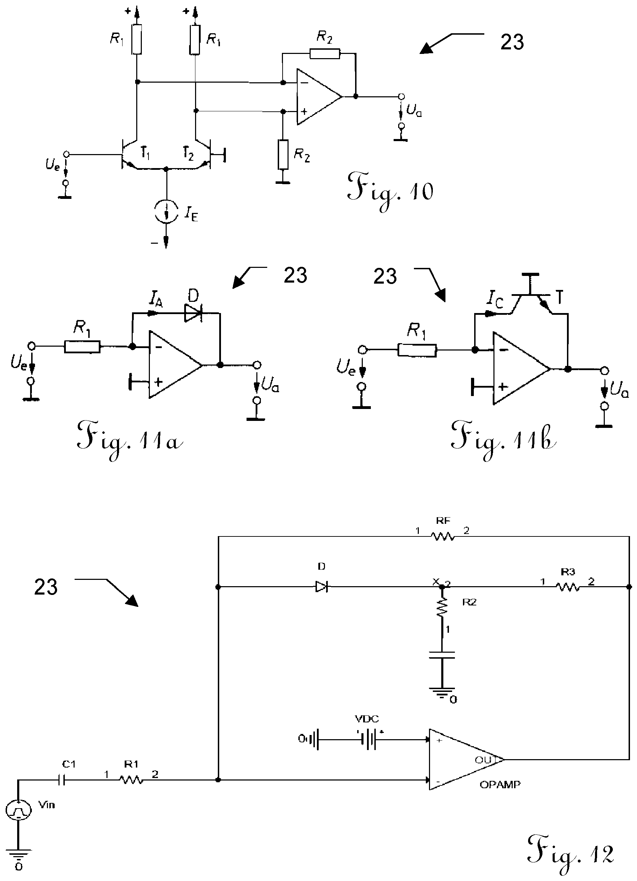

Selbstverständlich sind die Schaltungen aus Fig. 7a, 7b, 7c und/oder Fig. 12 sowohl miteinander als auch mehrfach mit sich selbst kombinierbar um beispielsweise Kennlinien mit mehreren Knickstellen zu erzielen. Gemein ist den drei Schaltungen, dass diese durch das Leitfähigwerden von Dioden im Rückkopplungsnetzwerk bzw. im Eingang ab einem gewissen Spannungsschwellwert die Verhältnisse in einem verstärkungsbestimmenden Rückkoppelnetzwerk verändern und dadurch eine Änderung des Verstärkungsfaktors bewirken.

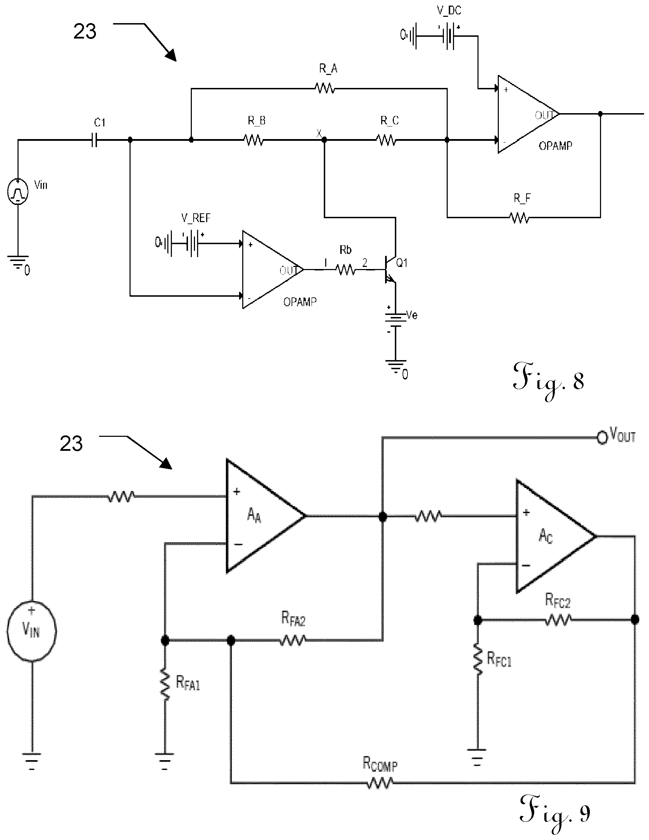

Fig. 8 zeigt ein beispielhaftes Schaltschema einer Ausführungsform einer erfindungsgemässen nichtlinearen Verstärkerstufe 23 mit einem Spannungskomparator. Dabei verursacht der Komparator bei überschreiten eines Schwellwerts V_REF durch die Eingangsamplitude eine sprunghafte Änderung des Verstärkungsfaktors der Verstärkerstufe 23 auf einen anderen Wert.

Fig. 9 zeigt ein beispielhaftes Schema einer Ausführungsform einer erfindungsgemässen nichtlinearen Verstärkerstufe 23, welche eine nichtlineare Charakteristik 24 mit mehreren Verstärkern, welche bei unterschiedlichen Eingangsspannungen in Sättigung gehen, erzielt.

Fig. 10 zeigt ein beispielhaftes Schaltschema einer Ausführungsform einer erfindungsgemässen nichtlinearen Verstärkerstufe 23, welche eine stetige Charakteristik in Form einer Sinus-Approximation aufweist, beispielsweise etwa ähnlich wie jene, die in Fig. 4 dargestellt ist. Es sind in der Literatur auch entsprechend komplexere Approximationen von Sinus-Funktionen mit mehreren Knickpunkten, Temperaturkompensation etc. bekannt.

Fig. 11a und Fig. 11b zeigen beispielhafte Schaltschemata von Ausführungsformen von erfindungsgemässen nichtlinearen Verstärkerstufen 23, welche eine logarithmische Eingangs-Ausgangs-Kennlinie 24 aufweisen.

Neben den in den Fig. 10, 11a und 11b gezeigten nichtlinearen Ein-Ausgangs-Übertragungsfunktionen sind noch weitere bekannt, etwa Exponentialfunktionen, oder auch frei einstellbare Funktionen, z.B. approximiert durch schaltungstechnisch realisierte Potenzreihen. Derartige Schaltungen weisen ebenfalls erfindungsgemässe Eingangs-Ausgangs-Charakteristiken auf. In der hier beschriebenen EDM-Anwendung sind jedoch auch weitere Nebenbedingungen, wie etwa geringe Rauschzahlen, geringer Stromverbrauch, Temperatur- und Alterungs-Stabilität, kein oder nur sehr geringer Trimmaufwand, bei der Produktion und für die Zeitmessung auch ein stabiles Zeitverhalten, zu beachten. In Anbetracht des gesamten Anforderungsspektrums kann daher durchaus eine einfache, teilweise lineare Verstärkerstufe mit ein oder zwei Knickpunkten in der Eingangs-Ausgangs-Kennlinie gegenüber komplexeren Schaltungen durchaus bevorzugt sein - was im jeweiligen, konkreten Ausführungsbeispiel durch Berechnungen oder Simulationen ermittelt werden kann.

Fig. 12 zeigt eine weitere erfindungsgemässe Ausführungsform einer schaltungstechnischen Realisierung einer erfindungsgemässen nichtlinearen Verstärkerstufe 23 in einem EDM, welche dem Designprinzip von Fig. 7c folgt. Diese Ausführungsform zeichnet sich unter anderem dadurch aus, dass mit dieser Schaltung die Lage des Knickpunkts einfach variiert werden kann, die Schaltung aufgrund ihrer geringen kapazitiven Wirkung gut für schnelle bzw. hochfrequenten Signale geeignet ist und bedingt durch die geringe Anzahl von Komponenten auch der Energieverbrauch gering ist. Im Gegensatz zu Fig. 7c ist die Diode umgepolt und der nichtinvertierenden Eingang des OPVs ist mit einem Bias beaufschlagt. Das invertierende Verhalten kann beispielsweise durch eine Kaskadierung von Fig. 7c und Fig. 12 aufgehoben werden, wobei zwei zusammenfallende oder zwei getrennte Knickpunkt 82 realisiert werden können.

## Patentansprüche

1. Beobachtungsgerät (19) zur Anzielung eines Zielobjekts (11), ausgebildet als Fernrohr, Zielfernrohr, Teleskop, Nachtsichtgerät, Monokular oder Binokular, mit einem elektrooptischen Entfernungsmesser (99), insbesondere Laser-Distanzmesser, mit:
▪ einer Sendeeinheit mit einer Lichtquelle (6), insbesondere einem Halbleiterlaser oder einer LED, zur Aussendung von impulsartig intensitätsmodulierter optischer Strahlung (10) als Lichtpulse,
▪ einer Empfangseinheit zum Empfang eines von dem mit dem Beobachtungsgerät (19) angezielten Zielobjekt (11) zurückgeworfenen Anteils (12) der optischen Strahlung (10) durch ein photosensitives elektrisches Bauelement (1) und zur Umwandlung in ein elektrisches Empfangssignal als Eingangspulse, insbesondere mit einer Photodiode, speziell einer APD oder PIN-Photodiode,
▪ einer Konditioniereinheit (2) zur Konditionierung des Empfangssignals, insbesondere in Form von Impedanzwandeln, Filtern, Verstärken, Bandbegrenzen und/oder heterodynem oder homodynem Mischen, mit zumindest einer Verstärkerstufe (23), zur Erzeugung eines konditionierten Empfangssignals als Ausgangspulse,
▪ einem Analog-Digital-Wandler (3) zur Digitalisierung des konditionierten Empfangssignals und
▪ einer elektronischen Auswerteeinheit (4), welche derart ausgebildet ist, dass auf Basis einer Signallaufzeit anhand des digitalisierten Empfangssignals eine Distanz (13) vom Entfernungsmesser (99) zum Zielobjekt (11) ermittelbar ist,
wobei die Verstärkerstufe (23) derart ausgebildet ist, dass diese unterhalb ihrer Sättigung eine nichtlineare und eine Amplituden-Dynamik-Kompression bewirkende Eingangs-Ausgangs-Charakteristik (24) aufweist, welche ein Eingangssignal der Verstärkerstufe (23) eindeutig auf ein Ausgangssignal der Verstärkerstufe (23) abbildet,
wofür die Verstärkerstufe (23) aufweist einen ersten Verstärkungsfaktor für einen ersten Amplitudenwert des Eingangssignals und zumindest einen im Vergleich zum ersten kleineren zweiten Verstärkungsfaktor für einen im Vergleich zum ersten höheren zweiten Amplitudenwert des Eingangssignals, wobei der erste und der zweite Verstärkungsfaktor ungleich Null sind, **dadurch gekennzeichnet, dass** die Eingangs-Ausgangs-Charakteristik (24) eine stückweise lineare Funktion ist mit zumindest einem Knickpunkt und zumindest zwei diskreten Verstärkungsfaktorbereichen mit jeweils konstantem Verstärkungsfaktor.

2. Beobachtungsgerät (19) mit Entfernungsmesser (99) nach Anspruch 1, **dadurch gekennzeichnet, dass** die Verstärkerstufe (23) für Empfangssignal-Amplituden unterhalb eines Schwellwertes den ersten Verstärkungsfaktor aufweist und für Empfangssignal-Amplituden über dem Schwellwert den zweiten Verstärkungsfaktor aufweist.

3. Beobachtungsgerät (19) mit Entfernungsmesser (99) nach einem der Ansprüche 1 bis 2, **dadurch gekennzeichnet,**
**dass**
die elektronische Auswerteeinheit (4) derart ausgebildet ist, dass diese die Nichtlinearität der Verstärkerstufe (23) numerisch kompensiert und eine lineare Darstellung des Empfangssignals wiederherstellt, wobei die elektronischen Auswerteeinheit (4) derart ausgebildet ist, dass die Distanz mit einer numerischen Kompensationseinheit zum rechnerischen annullieren der nichtlinearen Eingangs-Ausgangs-Charakteristik (24) am digitalisierten Empfangssignal anhand einer Inversen der nichtlinearen Charakteristik (24) ermittelt wird.

4. Beobachtungsgerät (19) mit Entfernungsmesser (99) nach einem der Ansprüche 1 bis 3,
**dadurch gekennzeichnet,**
**dass**
die nichtlineare Eingangs-Ausgangs-Charakteristik (24) durch eine nichtlineare Rückkopplung der Verstärkerstufe (23) erfolgt, insbesondere wobei diese durch eine Sättigung eines Bauelements der Rückkopplung der Verstärkerstufe (23) erreicht wird, speziell wobei jedoch die Gesamtheit der Verstärkerstufe (23) und das photosensitive Bauelement (1) ungesättigt bleiben.

5. Beobachtungsgerät (19) mit Entfernungsmesser (99) nach Anspruch 4,
**dadurch gekennzeichnet, dass**
die nichtlineare Rückkopplung mit einer Diode oder einer Z-Diode in einem Rückkopplungsnetzwerk erzielt wird.

6. Beobachtungsgerät (19) mit Entfernungsmesser (99) nach] einem der Ansprüche 1 bis 5, **dadurch gekennzeichnet,**
**dass**
die nichtlineare Eingangs-Ausgangs-Charakteristik (24) durch eine Komparatorschaltung erfolgt, welche derart Ausgebildet ist, dass diese den Verstärkungsfaktor der Verstärkerstufe (23) abhängig von einer Amplitude des Empfangssignals zwischen zumindest zwei Werten umgeschaltet wird.

7. Beobachtungsgerät (19) mit einem Entfernungsmesser 99 nach einem der Ansprüche 1 bis 6,
**dadurch gekennzeichnet, dass**
eine Richtung der optischen Achse (34) des Beobachtungsgeräts (19) zumindest annähernd parallel zu einer Messrichtung des Entfernungsmessers (99) verläuft.

8. Entfernungsmessverfahren mit einem als Fernrohr, Zielfernrohr, Teleskop, Nachtsichtgerät, Monokular oder Binokular ausgebildeten Beobachtungsgerät (19) zur Anzielung eines Zielobjekts (11) und zur Bestimmung dessen Distanz (13) mit:
▪ einem Anzielen des Zielobjekts mit dem Beobachtungsgerät (19),
▪ einem Aussenden impulsartig amplitudenmodulierter optischer Strahlung (10) als Lichtpulse, insbesondere von Laserlicht,
▪ einem Empfangen eines Anteils der optischen Strahlung, welcher von dem Zielobjekt (11) zurückgeworfen wird, mit einem photosensitiven elektrischen Bauelement (1) welches die empfangene optische Strahlung (12) in ein elektrisches Empfangssignal als Eingangspulse umwandelt,
▪ einem Verstärken des Empfangsignals in einer Verstärkerstufe (23), zur Erzeugung eines verstärkten Empfangssignals als Ausgangspulse,
▪ einem Digitalisieren des verstärkten Empfangssignals mit einem Analog-Digital-Wandler (3), und
▪ einem Ermitteln der Distanz (13) vom Entfernungsmesser (99) zum Zielobjekt (11) auf Basis einer Signallaufzeit mit einem Auswerten des digitalisierten Empfangssignals mit einer elektronischen Auswerteeinheit (4),
wobei
▪ das Verstärken des Empfangssignals mit einem Komprimieren der Amplitudendynamik durch eine Verstärkerstufe (23) mit einer unterhalb ihrer Sättigung vorliegenden nichtlinearen Eingangs-Ausgangs-Charakteristik (24) und mit einem eindeutigen Abbilden eines Eingangssignals der Verstärkerstufe (23) auf ein Ausgangssignal der Verstärkerstufe (23) erfolgt, mit einem degressiven Verstärkungsfaktor hin zu höheren Empfangssignalamplituden, wofür die Verstärkerstufe (23) aufweist einen ersten Verstärkungsfaktor für einen ersten Amplitudenwert des Eingangssignals und zumindest einen im Vergleich zum ersten kleineren zweiten Verstärkungsfaktor für einen im Vergleich zum ersten höheren zweiten Amplitudenwert des Eingangssignals, wobei der erste und der zweite Verstärkungsfaktor ungleich Null sind,
▪ **dadurch gekennzeichnet, dass** die Eingangs-Ausgangs-Charakteristik (24) eine stückweise lineare Funktion ist mit zumindest einem Knickpunkt und zumindest zwei diskreten Verstärkungsfaktorbereichen mit jeweils konstantem Verstärkungsfaktor.

9. Das Verfahren nach Anspruch 8, **dadurch gekennzeichnet,**
**dass**
das Verstärken
▪ mit dem ersten Verstärkungsfaktor unterhalb eines Schwellwerts der Empfangssignalamplitude und
▪ mit dem zweiten Verstärkungsfaktor oberhalb des Schwellwerts
erfolgt.

10. Das Verfahren nach einem der Ansprüche 8 bis 9, **dadurch gekennzeichnet, dass**
das Auswerten des digitalisierten Empfangssignal mit einem numerischen kompensieren der Nichtlinearität des Verstärkens erfolgt, insbesondere durch ein expandieren des digitalisierten Empfangssignals mit einer Inversen der nichtlinearen Eingangs-Ausgangs-Charakteristik zur Wiederherstellung einer linearen Darstellung des elektrischen Empfangssignals.

11. Computerprogrammprodukt mit Programmcode, der auf einem maschinenlesbaren Träger gespeichert ist oder Computer-Daten-Signal, verkörpert durch eine elektromagnetische Welle, zur Durchführung des Verfahrens nach einem der Ansprüche 8 bis 10 insbesondere wobei der Programmcode ein numerisches kompensieren einer nichtlinearen Verstärkung in einer analogen Verstärkerstufe (23) einer Empfangseinheit eines Entfernungsmessers (99) durchführt, vorzugsweise wenn der Programmcode in einer Auswerteeinheit (4) eines als Fernrohr, Zielfernrohr, Teleskop, Nachtsichtgerät, Monokular oder Binokular ausgebildeten Beobachtungsgeräts (19) mit elektrooptischem Entfernungsmesser (99) nach einem der Ansprüche 1 bis 7 ausgeführt wird.

## Claims

1. Observation device (19) for targeting a target object (11), being built as telescope, spotting telescope, telescope, night vision device, monocular sighting device or binocular sighting device, having an electro-optical range finder (99), in particular laser range finder, comprising:
▪ a transmitting unit comprising a light source (6), in particular a semiconductor laser or an LED, for emitting pulse-mode-like intensity-modulated optical radiation (10) as light pulses,
▪ a receiving unit for receiving a portion (12) of the optical radiation (10), said portion being reflected from the target object (11) being targeted with the observation device (19), by means of a photosensitive electrical component (1) and for converting it into an electrical reception signal as incoming pulses, in particular comprising a photodiode, specifically an APD or PIN photodiode,
▪ a conditioning unit (2) for conditioning the reception signal, in particular in the form of impedance conversion, filtering, amplification, band limiting and/or heterodyne or homodyne mixing, comprising at least one amplifier stage (23), for generating a conditioned reception signal as output pulses,
▪ an analogue-to-digital converter (3) for digitizing the conditioned reception signal and
▪ an electronic evaluation unit (4), which is designed in such a way that a distance (13) from the distance measuring device (99) to the target object (11) can be determined on the basis of a signal propagation time with the aid of the digitized reception signal,
wherein
the amplifier stage (23) is designed in such a way that it has a non-linear input-output characteristic (24) below the saturation of the amplifier stage, the input-output characteristic (24) effectuating an amplitude dynamic range compression, wherefore the amplifier stage (23) has a first gain factor for a first amplitude value of the reception signal and at least a - compared to the first gain factor lower - second gain factor for a - compared to the first amplitude value higher - second amplitude value of the reception signal, the first gain factor and the second gain factor being unequal to zero,
**characterized in that**
the input-output characteristic (24) is a piecewise linear function with at least one knee point and at last two discrete gain factor ranges each having a constant gain factor.

2. Observation device (19) with range finder (99) according to Claim 1, **characterized in that**
the amplifier stage (23) has the first gain factor for reception signal amplitudes below a threshold value and has the second gain factor for reception signal amplitudes above the threshold value.

3. Observation device (19) with range finder (99) according to any one of Claims 1 to 2, **characterized in that**
the electronic evaluation unit (4) is designed in such a way that it numerically compensates for the nonlinearity of the amplifier stage (23) and reestablishes a linear representation of the reception signal,
therein the electronic evaluation unit (4) being designed in such a way that the distance is determined by means of a numerical compensation unit for computationally nullifying the non-linear input-output characteristic (24) at the digitized reception signal with the aid of an inverse of the non-linear characteristic (24).

4. Observation device (19) with range finder (99) according to any one of Claims 1 to 3,
**characterized in that**
the non-linear input-output characteristic (24) is effected by a non-linear feedback of the amplifier stage (23),
in particular wherein the latter is achieved by a saturation of a component of the feedback of the amplifier stage (23), specifically wherein, however, the totality of the amplifier stage (23) and the photosensitive component (1) remain unsaturated.

5. Observation device (19) with range finder (99) according to Claim 4,
**characterized in that**
the non-linear feedback is obtained by means of a diode or a zener diode in a feedback network.

6. Observation device (19) with range finder (99) according to any one of Claims 1 to 5, **characterized in that**
the non-linear input-output characteristic (24) is effected by a comparator circuit, which is designed in such a way that it changes over the gain factor of the amplifier stage (23) between at least two values depending on an amplitude of the reception signal.

7. Observation device (19) with range finder (99) according to any one of Claims 1 to 6, **characterized in that**
a direction of the optical axis (34) of the observation device (19) runs at least approximately parallel to a measuring direction of the range finder (99).

8. Distance measuring method with an observation device (19) for targeting a target object (11) and determining the distance to the target object (11), the observation device (19) being built as telescope, spotting telescope, telescope, night vision device, monocular sighting device or binocular sighting device,
the distance measuring method comprising:
▪ targeting the target object with the an observation device (19),
▪ emitting pulse-mode-like amplitude -modulated optical radiation (10) as light pulses, in particular laser light,
▪ receiving a portion of the optical radiation, said portion being reflected from the target object (11), by means of a photosensitive electrical component (1), which converts the received optical radiation (12) into an electrical reception signal as incoming pulses,
▪ amplifying the reception signal in an amplifier stage (23), for the generation of an amplified reception signal as output pulses,
▪ digitizing the amplified reception signal by means of an analogue-to-digital converter (3), and
▪ determining a distance (13) from the range finder (99) to the target object (11) on the basis of a signal propagation time by means of evaluating the digitized reception signal by means of an electronic evaluation unit (4),
wherein
the amplification of the reception signal is effected with compression of the amplitude dynamic range by an amplifier stage (23) having a non-linear input-output characteristic (24) below the saturation of the amplifier stage and with a single-valued mapping of a incoming signal of the amplifier stage (23) onto a output signal of the amplifier stage (23), with a degressive gain factor towards higher reception signal amplitudes, wherefore the amplifier stage (23) has a first gain factor for a first amplitude value of the reception signal and at least a - compared to the first gain factor lower - second gain factor for a - compared to the first amplitude value higher - second amplitude value of the reception signal, the first gain factor and the second gain factor being unequal to zero,
**characterized in that**
the input-output characteristic (24) is a piecewise linear function with at least one knee point and at last two discrete gain factor ranges each having a constant gain factor.

9. Method according to Claim 8, **characterized in that** the amplification is effected
▪ with the first gain factor below a threshold value of the reception signal amplitude and
▪ with the second gain factor above the threshold value.

10. Method according to any one of Claims 8 to 9, **characterized in that**
the evaluation of the digitized reception signal is effected by means of numerical compensation of the nonlinearity of the amplification, in particular by expanding the digitized reception signal with an inverse of the non-linear input-output characteristic for re-establishing a linear representation of the electrical reception signal.

11. Computer program product comprising program code stored on a machine-readable carrier, or computer data signal, embodied by an electromagnetic wave, for carrying out the method according to any one of Claims 8 to 10, in particular wherein the program code carries out numerical compensation of a non-linear gain in an analogue amplifier stage (23) of a receiving unit of a range finder (99), preferably if the program code is executed in an evaluation unit (4) of an observation device (19) according to any one of Claims 1 to 7, the observation device (19) being built as telescope, spotting telescope, telescope, night vision device, monocular sighting device or binocular sighting device, and having an electro-optical range finder (99).

## Revendications

1. Appareil d'observation (19) pour viser un objet cible (11), réalisé sous la forme d'une lunette, d'une lunette de visée, d'un télescope, d'un appareil de vision nocturne, d'un monoculaire ou d'un binoculaire, doté d'un télémètre électro-optique (99), en particulier d'un distancemètre laser, comprenant :
▪ une unité d'émission avec une source lumineuse (6), en particulier un laser à semi-conducteur ou une LED, pour émettre un rayonnement optique (10) modulé en intensité de manière impulsionnelle sous la forme d'impulsions lumineuses,
▪ une unité de réception pour recevoir une part (12) du rayonnement optique (10) réfléchie par l'objet cible (11) visé avec l'appareil d'observation (19) avec un composant électrique photosensible (1) et pour la convertir en un signal électrique de réception en tant qu'impulsions d'entrée, en particulier avec une photodiode, plus particulièrement une photodiode APD ou PIN,
▪ une unité de conditionnement (2) pour conditionner le signal de réception, en particulier par conversion d'impédance, filtrage, amplification, limitation de bande et/ou mélange hétérodyne ou homodyne, comportant au moins un étage amplificateur (23), pour produire un signal de réception conditionné en tant qu'impulsions de sortie,
▪ un convertisseur analogique-numérique (3) pour numériser le signal de réception conditionné et
▪ une unité électronique d'évaluation (4) qui est conçue pour permettre de déterminer sur la base d'un temps de parcours du signal, à partir du signal de réception numérisé, une distance (13) du télémètre (99) à l'objet cible (11),
l'étage amplificateur (23) étant conçu de façon à présenter, au-dessous de sa saturation, une caractéristique d'entrée-sortie (24) non linéaire et provoquant une compression de la dynamique d'amplitude, qui reproduit de façon univoque un signal d'entrée de l'étage amplificateur (23) sur un signal de sortie de l'étage amplificateur (23),
ce pour quoi l'étage amplificateur (23) présente un premier facteur d'amplification pour une première valeur d'amplitude du signal d'entrée et au moins un deuxième facteur d'amplification, inférieur au premier, pour une deuxième valeur d'amplitude du signal d'entrée, supérieure à la première, le premier et le deuxième facteur d'amplification étant différents de zéro,
**caractérisé en ce**
**que** la caractéristique d'entrée-sortie (24) est une fonction linéaire par morceaux avec au moins un point d'inflexion et au moins deux plages de facteur d'amplification discrètes avec chaque fois un facteur d'amplification constant.

2. Appareil d'observation (19) avec télémètre (99) selon la revendication 1,
**caractérisé en ce**
**que** l'étage amplificateur (23) présente le premier facteur d'amplification pour des amplitudes de signal de réception inférieures à une valeur seuil et présente le deuxième facteur d'amplification pour des amplitudes de signal de réception supérieures à la valeur seuil.

3. Appareil d'observation (19) avec télémètre (99) selon l'une des revendications 1 à 2,
**caractérisé en ce**
**que** l'unité électronique d'évaluation (4) est conçue de façon à compenser numériquement la non-linéarité de l'étage amplificateur (23) et à rétablir une représentation linéaire du signal de réception,
l'unité électronique d'évaluation (4) étant conçue de façon que la distance soit déterminée avec une unité de compensation numérique pour annuler par calcul la caractéristique d'entrée-sortie (24) non linéaire sur le signal de réception numérisé à l'aide d'une inverse de la caractéristique non linéaire (24).

4. Appareil d'observation (19) avec télémètre (99) selon l'une des revendications 1 à 3,
**caractérisé en ce**
**que** la caractéristique d'entrée-sortie (24) non-linéaire est réalisée par une rétroaction non-linéaire de l'étage amplificateur (23),
en particulier celle-ci étant obtenue par une saturation d'un composant de la rétroaction de l'étage amplificateur (23), plus particulièrement la totalité de l'étage amplificateur (23) et le composant photosensible (1) restant cependant non saturés.

5. Appareil d'observation (19) avec télémètre (99) selon la revendication 4,
**caractérisé en ce**
**que** la rétroaction non-linéaire est obtenue avec une diode ou une diode Zener dans un réseau de rétroaction.

6. Appareil d'observation (19) avec télémètre (99) selon l'une des revendications 1 à 5,
**caractérisé en ce**
**que** la caractéristique d'entrée-sortie (24) non linéaire est réalisée par un circuit comparateur qui est conçu de façon à commuter le facteur d'amplification de l'étage amplificateur (23) entre au moins deux valeurs en fonction d'une amplitude du signal de réception.

7. Appareil d'observation (19) avec télémètre (99) selon l'une des revendications 1 à 6,
**caractérisé en ce**
**qu'**une direction de l'axe optique (34) de l'appareil d'observation (19) est au moins approximativement parallèle à une direction de mesure du télémètre (99).

8. Procédé de mesure de distance avec un appareil d'observation (19) réalisé sous la forme d'une lunette, d'une lunette de visée, d'un télescope, d'un appareil de vision nocturne, d'un monoculaire ou d'un binoculaire pour viser un objet cible (11) et pour déterminer sa distance (13), consistant à :
▪ viser l'objet cible avec l'appareil d'observation (19),
▪ émettre un rayonnement optique (10) modulé en amplitude de manière impulsionnelle sous la forme d'impulsions lumineuses, en particulier d'une lumière laser,
▪ recevoir une part du rayonnement optique qui est réfléchie par l'objet cible (11) avec un composant électrique photosensible (1) qui convertit le rayonnement optique reçu (12) en un signal électrique de réception en tant qu'impulsions d'entrée,
▪ amplifier le signal de réception dans un étage amplificateur (23) pour produire un signal de réception amplifié en tant qu'impulsions de sortie,
▪ numérisèr le signal de réception amplifié avec un convertisseur analogique-numérique (3), et
▪ déterminer la distance (13) du télémètre (99) à l'objet cible (11) sur la base d'un temps de parcours du signal par une évaluation du signal de réception numérisé avec une unité électronique d'évaluation (4),
dans lequel procédé
▪ l'amplification du signal de réception est réalisée par une compression de la dynamique d'amplitude par un étage amplificateur (23) présentant une caractéristique d'entrée-sortie (24) non linéaire se trouvant au-dessous de sa saturation et par une reproduction univoque d'un signal d'entrée de l'étage amplificateur (23) sur un signal de sortie de l'étage amplificateur (23), avec un facteur d'amplification dégressif vers les amplitudes de signal de réception plus élevées, ce pour quoi l'étage amplificateur (23) présente un premier facteur d'amplification pour une première valeur d'amplitude du signal d'entrée et au moins un deuxième facteur d'amplification, inférieur au premier, pour une deuxième valeur d'amplitude du signal d'entrée, supérieure à la première, le premier et le deuxième facteur d'amplification étant différents de zéro,
**caractérisé en ce**
**que** la caractéristique d'entrée-sortie (24) est une fonction linéaire par morceaux avec au moins un point d'inflexion et au moins deux plages de facteur d'amplification discrètes avec chaque fois un facteur d'amplification constant.

9. Procédé selon la revendication 8,
**caractérisé en ce**
**que** l'amplification est réalisée
▪ avec le premier facteur d'amplification au-dessous d'une valeur seuil de l'amplitude du signal de réception et
▪ avec le deuxième facteur d'amplification au-dessus de la valeur seuil.

10. Procédé selon l'une des revendications 8 à 9,
**caractérisé en ce**
**que** l'évaluation du signal de réception numérisé est effectuée par une compensation numérique de la non-linéarité de l'amplification, en particulier par une expansion du signal de réception numérisé avec une inverse de la caractéristique d'entrée-sortie non linéaire pour rétablir une représentation linéaire du signal électrique de réception.

11. Produit-programme informatique avec un code de programme qui est enregistré sur un support lisible par une machine ou signal de données informatiques représenté par une onde électromagnétique pour mettre en oeuvre le procédé selon l'une des revendications 8 à 10, en particulier le code de programme effectuant une compensation numérique d'une amplification non linéaire dans un étage amplificateur analogique (23) d'une unité de réception d'un télémètre (99), de préférence lorsque le code de programme est exécuté dans une unité d'évaluation (4) d'un appareil d'observation (19) avec télémètre électro-optique (99) réalisé sous la forme d'une lunette, d'une lunette de visée, d'un télescope, d'un appareil de vision nocturne, d'un monoculaire ou d'un binoculaire selon l'une des revendications 1 à 7.
